# EUROPEAN PATENT APPLICATION

(11) **EP 4 845 130 A1**
(43) Date of publication of application: **25.11.2026**
(21) Application number: 26179489.5
(22) Date of filing: 19.05.2026
(51) Int. Cl.: H04L 69/166, H04L 47/36, H04L 69/163, H04L 45/745, H04L 69/22

(54) **EFFICIENT MSS CLAMPING USING EGRESS INTERFACE INFORMATION MATCHING IN TCAM**

(30) Priority: 19.05.2025 US 202519212457
(71) Applicant: Arista Networks, Inc., Santa Clara, CA 95054 (US)
(72) Inventor: COFFILL, David Eric, Santa Clara, CA, 95054 (US); OLAKANGIL, Joseph, Santa Clara, CA, 95054 (US); NANDAKUMARAN, Purushothaman, Santa Clara, CA, 95054 (US)
(74) Representative: Hoffmann Eitle

(57) **Abstract**

A packet processor in a network device selectively offloads TCP handshake packets to a processing unit for MSS clamping. According to one embodiment, the packet processor applies search data for a TCP handshake packet against contents of a TCAM to identify an MSS clamping rule from the TCAM. The search includes egress L3 interface related data determined for the TCP handshake packet and the MSS clamping rule has an MSS clamping rule qualifier that matches the egress L3 interface related data. The MSS clamping rule includes an action to cause the packet processor to offload the TCP handshake packet to the processing unit for MSS clamping.

## Description

### BACKGROUND

Maximum transmission unit (MTU) refers to the largest packet that a device will accept. For transmission control protocol/internet protocol (TCP/IP) packets, the MTU refers to the maximum size of a data packet including the transmission control protocol (TCP) header, internet protocol (IP) header, and payload. A packet that exceeds an MTU along a network path may have to be fragmented into several smaller packets that do not exceed the MTU. Fragmenting packets, however, increases latency and may result in packet loss. Maximum segment size (MSS) clamping is a technique that can be used to prevent packet fragmentation if some portion of a network has an MTU bottleneck. The MSS value specifies the maximum amount of data that a device will accept in a single TCP segment, not including the IP header and TCP header.

TCP uses a three-way handshake to establish an end-to-end connection between devices on a TCP network. In a TCP three-way handshake between two devices, the initiating device (e.g., a client) sends a TCP synchronize (SYN) packet to the second device (e.g., server), the second device (e.g., a server) returns a synchronize-acknowledgement (SYN-ACK) packet to the first device, and the first device returns a TCP acknowledgement (ACK) packet to the second device. The SYN packet or SYN-ACK may include an MSS option field specifying an MSS value indicating for the sending device. With MSS clamping, MSS values are edited in an effort to ensure that packets can traverse a network path without fragmentation.

### BRIEF DESCRIPTION OF DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.
FIG. 1 is a diagrammatic representation of one embodiment of a network device.
FIG. 2 is a flowchart illustrating one embodiment of a method for packet processing to selectively offload packets for MSS clamping.
FIG. 3 is a flowchart illustrating one embodiment of a method for MSS clamping.

### WRITTEN DESCRIPTION

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure the embodiments in detail. It should be understood, however, that the detailed description and the specific examples are given by way of illustration only and not by way of limitation. Various substitutions, modifications, additions and/or rearrangements within the spirit and/or scope of the underlying inventive concept will become apparent to those skilled in the art from this disclosure.

Network devices, such as switches, routers, gateways, and other types of network devices, may include a packet processor to handle forwarding decisions for forwarding traffic (e.g., to handle Layer 2 switching or Layer 3 switching/routing). In high-capacity network devices, the packet processor may be implemented as a specificized chip, such as an application specific integrated circuit (ASIC), designed for the routing and switching of packets. An ASIC can be orders of magnitude faster than a programmed central processing unit (CPU) for forwarding packets.

It may be desirable, in some circumstances, for a network device to apply TCP MSS clamping to packets. TCP MSS clamping limits the value of the MSS in the TCP header of TCP SYN or TCP SYN-ACK packets. Setting the MSS ceiling can, for example, avoid **IP** fragmentation in tunnel scenarios by ensuring that the MSS is low enough to account for the extra overhead of one or more tunnel outer headers such as generic routing encapsulation (GRE) and tunnel outer **IP** headers. When TCP MSS clamping is enabled, the network device overwrites the TCP MSS values in routed TCP handshake packets in which the MSS values exceed the configured ceiling limit. The TCP checksum may also be recomputed and updated.

Performing MSS clamping operations entirely in hardware is difficult and many packet processors do not explicitly support MSS clamping. One solution is to perform MSS clamping in software. In some network devices, when TCP MSS clamping feature is enabled on any routed interface, all routed packets with the SYN flag set are sent by default to the CPU and switched through software, even on interfaces where no TCP MSS ceiling has been configured. This limits the number of TCP sessions that can be established through the switch per second, and, because throughput for software forwarding is limited, this feature can also cause packet loss if the rate at which packets are sent to the CPU exceeds the CPUs ability to process the packets or limits configured in control-plane policies.

Embodiments of the present disclosure include efficient systems and methods for MSS clamping in which the packet processor offloads the handling of handshake packets to another processing unit to execute MSS clamping. For instance, the packet processor may transfer handshake packets to a local supervisory CPU that effectuates MSS clamping through a software data path. Nonetheless, the offload of a substantial volume of handshake packets to the CPU may prove impractical in large network environments. Should the CPU be unable to handle the volume of offloaded packets, it may result in dropped TCP handshakes, thereby degrading other control plane operations, significantly curtailing network throughput, and potentially causing network outages due to the inability of devices to establish new TCP sessions. Accordingly, the packet processor employs techniques to selectively offload handshake packets for MSS clamping. In certain embodiments, the process of selecting which packets to offload for MSS processing is executed in hardware utilizing temary content-addressable memory (TCAM).

MSS clamping can be configured on the L3 interfaces of a network device where the L3 interfaces are interfaces (physical or logical) that operate at Layer 3 of the Open Systems Interconnection (OSI) model-that is, at the network layer in the TCP/IP model-and have **IP** addresses. MSS clamping can be configured on physical L3 interfaces (e.g., physical ports configured with **IP** addresses) and logical L3 interfaces (e.g., port-channels, tunnel interfaces, switch virtual interfaces (SVIs), subinterfaces, and Vxlan interfaces configured with **IP** addresses). Embodiments of the present disclosure use information about the egress L3 interface for a packet as a factor in determining whether to offload the packet for MSS clamping. For example, a packet processor processing a TCP SYN or SYN-ACK packet may determine that the egress L3 interface has MSS clamping configured on it and offload the handshake packet to another processing unit to perform MSS clamping. In an even more particular embodiment, the packet processor matches information about the egress L3 interface for the packet to an MSS clamping rule in TCAM and executes the MSS clamping rule to offload the packet to another processing unit.

According to one embodiment, the packet processor uses a set of data (search data) to identify (search, match) rules in TCAM. The search data for a packet may include information from or associated with the packet, including, for example, metadata determined for the packet by the packet processor. The search data used to determine if the packet matches an MSS clamping rule includes egress L3 interface related data related to the egress L3 interface for the packet. A variety of egress L3 interface related data may be used. According to one embodiment, the egress L3 interface related data includes one or more of the following: egress L3 interface identifier (e.g., next hop ID or other egress L3 interface ID) determined for the packet, a clamping class code, or a multicast group identifier. The search data may include additional data that is not related to the egress L3 interface, such as, but not limited to, the IP type set in the packet, TCP flags set in the packet or an indication of whether the packet is routable.

According to one embodiment, MSS clamping rules are encoded in TCAM with respective MSS clamping rule qualifiers so that only packets that meet the MSS clamping rule qualifier for a rule match the rule. The MSS clamping rule qualifier for a rule may, in some embodiments, include multiple qualifiers. MSS clamping rule qualifier for an MSS clamping rule may include one or more qualifiers that matches egress L3 interface related data. For example, the MSS clamping rule qualifier, according to one embodiment, includes one or more of the following: an egress L3 interface qualifier (e.g., so that only packets associated with a specified next hop id or other indicator of egress L3 interface match the rule), a clamping class code qualifier (e.g., so that only packets having a clamping class code that meets the qualifier match the rule), a multicast group qualifier (e.g., so that only packets having a specified multicast group identifier match the rule). The MSS qualifier for an MSS rule may include additional qualifiers not related to L3 egress interface, such as, but not limited to, an IP type qualifier (IPv4, IPv6, IPv4+IPv6, depending on the interface clamping configuration, so that only packets of the specified IP type match the rule), TCPControl qualifiers (e.g., so that only packets with specified TCP flags set match the rule), or a routable qualifier (e.g., so that routed, but not bridged, traffic matches the rule).

An MSS clamping rule may include one or more actions to be executed on packets that match the rule. If no clamping rule is matched for a packet, packet forwarding continues for the packet without applying MSS clamping to the packet. An 'offload' action, for example, causes the packet processor to offload the packet to a CPU of the network device for MSS clamping in software. In other embodiments, a clamping rule may include an action that causes the packet processor to forward the packet to an MSS clamping appliance or another remote device configured to implement MSS clamping. A 'drop' action causes the packet processor to drop the packet. A clamping rule can include multiple actions, such as offload to cause the packet processor to offload the packet to the CPU and drop to cause the packet processor to drop the packet from the pipeline.

By selectively offloading packets to the CPU or other processing unit for MSS clamping, embodiments of the present disclosure can thus provide MSS clamping in network devices in which the packet processors do not support MSS clamping, while maintaining high, scalable throughput by not offloading packets for MSS clamping that do not require MSS clamping.

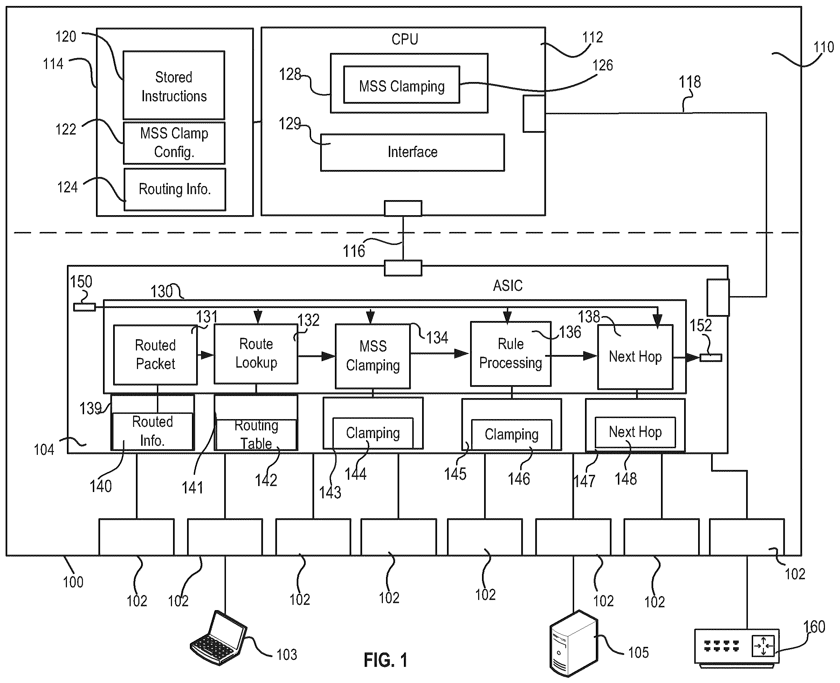

FIG. 1 is a diagrammatic representation of a general architecture of one embodiment of network device 100 connected between a client device 103 and a server 105. Network device 100 comprises a plurality of network interfaces 102 (also referred to as ports) and a packet processor 104 connected to interfaces 102. Packet processor 104 is a hardware-based packet processor implemented, for example, as an ASIC. Network device 100 further includes a supervisor unit 110 having a central processing unit (CPU) 112 connected to other components such as memory 114 and packet processor 104 by an internal bus system. In one embodiment, a high-speed bus 116, such as a peripheral component interconnect express (PCIe) bus, connects between CPU 112 and packet processor 104. In the embodiment illustrated, packet processor 104 also connects to CPU 112 by an internal ethernet connection 118 between an ethernet port of packet processor 104 and an ethernet port of CPU 112.

Referring to supervisor unit 110, memory 114 includes stored instructions 120, which may include instructions for a variety of software programs, such as, but not limited to, a network operating system, which is a specialized operating system for a network device (e.g., router, switch, firewall, and the like). For example, the network operating system may be Arista Extensible Operating System (EOS^{®}), which is a fully programmable and highly modular, Linux-based network operating system. Other network operating systems may be used.

According to one embodiment, stored instructions 120 are executable by CPU 112 to provide a user interface 129, such as command line interface (CLI) or another type of interface. Through interface 129, a user with sufficient privileges (e.g., an administrator) can configure various aspects of network device 100. Supervisor unit 110 uses information configured at supervisor unit 110 to configure packet processor 104 (e.g., store and update routing tables, implement interface configurations, etc.).

Interface 129 supports input (e.g., CLI commands or other inputs) that allow the user to configure MSS clamping on L3 interfaces. According to one embodiment, the user can enable/disable MSS clamping on an L3 interface and set an MSS ceiling (a maximum MSS value) to use when applying MSS clamping to the interface. MSS clamping may be enabled/disabled on an L3 interface on a per-Internet Protocol version basis (e.g., IPv4, IPv6). For example, MSS clamping on an L3 interface may be disabled for both IPv4 and IPv6, enabled for IPv4 and disabled for IPv6, disabled for IPv4 and enabled for IPv6, or enabled for both IPv4 and IPv6. Further, when MSS clamping is enabled on an L3 interface for both IPv4 and IPv6, the same or different MSS ceilings may be used for IPv4 and IPv6. Thus, memory 114 may include an MSS clamping configuration 122 that specifies the L3 interfaces on which MSS clamping is enabled, the protocol versions for which it is enabled on the interfaces, and the MSS ceiling(s) for the interfaces. Stored instructions 120 include instructions executable by CPU 112 to implement MSS clamping component 126 that applies MSS clamps according to the MSS clamping configuration 122.

Stored instructions 120 include instructions executable by CPU 112 to implement a software forwarding engine (SFE) 128. SFE 128 may be implemented using hardware accelerated CPU functionality to perform high performance packet processing. SFE 128 may be programmed with routes 124 (e.g., a routing table or forwarding table) and other data used by SFE 128. In one embodiment, routes 124 includes the same routes as used by packet processor 104. SFE 128 may thus comprise a software forwarding pipeline to perform routing of packets where the software forwarding pipeline includes an MSS clamping stage (e.g., MSS clamping component 126).

For packets offloaded to CPU 112 for MSS clamping, CPU 112 processes the packets according to clamping configuration 122. In particular, when processing an offloaded packet, MSS clamping component 126 determines the MSS ceiling specified for the egress L3 interface for the packet and, if the packet does not include an MSS value or the MSS value specified in the packet header exceeds the MSS ceiling associated with the egress L3 interface, sets the MSS value in the packet header to the MSS ceiling associated with the egress L3 interface for the packet. CPU 112 may further process the packet and return the updated packet to packet processor 104 over bus 116 or ethernet connection 118. In one embodiment, CPU 112 determines the next hop for the packet and injects the packet back into the egress pipeline.

Packet processor 104 implements a forwarding pipeline 130 for forwarding packets, transforming ingress packets (e.g., ingress packet 150) into egress packets (e.g., egress packet 152) that are sent out using egress L3 interfaces. Forwarding pipeline 130 can implement a variety of operations related to forwarding packets. For the sake of example, the illustrated embodiment includes a routed packet identification stage 131, routing lookup stage 132, clamping class code lookup stage 134, rule processing stage 136, and next hop stage 138. The stages in forwarding pipeline 130 include logic to update the packet or provide metadata related to the packet that is used in subsequent stages. The stages illustrated in FIG. 1 are provided by way of example and the forwarding pipeline may include additional or alternative stages. Moreover, one or more of the stages illustrated in FIG. 1 may comprise several stages.

The stages include associated memory (e.g., memory 139, memory 141, memory 143, memory 145, memory 147) configured with lookup tables or other data structures that can be used to update the packet or provide the packet metadata. The table lookups for one or more stages may be implemented at wire speed using TCAM or other hardware-based mechanism. In one embodiment, lookups at routed packet identification stage 131, route lookup stage 132, and rule processing stage 136 are performed using TCAM. In some embodiments, one or more stages use a shared memory, such as a shared TCAM.

Rule processing stage 136 executes the rules to perform functions such as, but not limited to, filtering based on Access Control Lists (ACLs), marking packets for Quality of Service (QoS) handling, rate limiting, enforcing VLAN membership, redirecting packets, and offloading packets for processing. In particular, rule processing stage 136 matches packets to MSS clamping rules 146 to offload packets to CPU 112 or other processing unit to perform MSS clamping.

MSS clamping rules 146 are encoded in memory 145, such as TCAM, with respective MSS clamping rule qualifiers so that only packets that meet the MSS clamping rule qualifier for a rule match the rule. The MSS clamping rule qualifier for an MSS clamping rule may include one or more qualifiers that matches egress L3 interface related data. For example, the MSS clamping rule qualifier, according to one embodiment, includes one or more of the following: an egress L3 interface qualifier (e.g., so that only packets associated with a specified next hop id or other indicator of egress L3 interface match the rule), a clamping class code qualifier (e.g., so that only packets having a clamping class code that meets the qualifier match the rule), a multicast group qualifier (e.g., so that only packets having a specified multicast group identifier match the rule). The MSS qualifier for an MSS rule may include additional qualifiers not related to L3 egress interface, such as, but not limited to, an IP type qualifier (IPv4, IPv6, IPv4+IPv6, depending on the interface clamping configuration, so that only packets of the specified IP type match the rule), TCPControl qualifiers (e.g., so that only packets with specified TCP flags set match the rule), or a routable qualifier (e.g., so that routed, but not bridged, traffic matches the rule). In some embodiments, the MSS clamping rule is encoded with an MSS ceiling qualifier.

In some embodiments, TCAM 145 may include MSS clamping rules for unicast IPv4 packets, unicast IPv6 packets, and multicast packets. In one example of an IPv4 MSS clamping rule, the IPv4 MSS clamping rule may be encoded with the qualifiers such that: i) the IPv4 bit must be set in the clamping class code for a packet for the packet to match the rule, ii) the version field in the packet must indicate IPv4 for the packet to match the rule; iii) the SYN flag is set in the packet (indicating that packet is a SYN or SYN-ACK packet) for the packet to match the rule; and iv) the packet must be routed traffic (not bridged) to match the rule.

In one example of an IPv6 MSS clamping rule, the IPv6 MSS clamping rule may be encoded with the qualifiers such that: i) the IPv6 bit must be set in the clamping class code for a packet for the packet to match the rule, ii) the version field in the packet must indicate IPv6 for the packet to match the rule; iii) the SYN flag must be set in the packet (indicating that packet is a SYN or SYN-ACK packet) for the packet to meet the rule; and iv) the packet must be routed traffic (not bridged) to meet the rule.

As another example, an MSS clamping rule may be encoded with the qualifiers such that: i) multicast group id determined for a packet must match specified multicast group id; ii) the version field in the packet meets an IP type qualifier (IPv4, IPv6, IPv4+IPv6, depending on the interface clamping configuration) for the packet to match the rule; iii) the SYN flag is set in the packet (indicating that packet is a SYN or SYN-ACK packet) for the packet to match the rule; and iv) the packet is routed traffic (not bridged) for the packet to meet the rule.

Rule processing stage 136 uses search data to identify (search, match) rules in TCAM 145. The search data for a packet may include information from or associated with ingress packet 150, including, for example, metadata determined for the packet by pipeline 130 and includes egress L3 interface related data related to the egress L3 interface for the packet. A variety of egress L3 interface related data may be used. According to one embodiment, the egress L3 interface related data includes one or more of the following: egress L3 interface identifier (e.g., next hop ID or other egress L3 interface ID) determined for the packet, a clamping class code, or a multicast group identifier. The search data may include additional data that is not related to the egress L3 interface, such as, but not limited to, the IP type set in the packet, TCP flags set in the packet or an indication of whether the packet is routable.

An MSS clamping rule 146 includes one or more actions to be executed on packets that match the rule. As such, if a clamping rule is matched for a packet, rule processing stage 136 executes the actions in the clamping rule on the packet. If no clamping rule is matched for the packet, packet forwarding continues without applying MSS clamping to the packet. An offload action, for example, causes packet processor 104 to offload the packet to CPU 112 for processing. In one embodiment, rule processing stage136 offloads packets to CPU for MSS clamping by forwarding the packets to CPU 112 via the internal ethernet connection 118. In other embodiments, rule processing stage 136 copies the packets to CPU 112 over bus 116. In other embodiments, a clamping rule may include an action that causes the packet processor 104 to forward the packet to an MSS clamping appliance 160 or another device configured to implement MSS clamping according to MSS clamping configuration 122. A drop action causes rule processing stage 136 to drop the packet from forwarding pipeline 130. A clamping rule can include multiple actions, such as offload to cause packet processor 104 to offload the packet to CPU 112 and drop to cause the packet processor to drop the packet from the pipeline.

Various processing stages in pipeline 130 can change packet header information or provide metadata for the packet that serves as input data to the next stage. One or more stages prior to rule processing stage 136 may, for example, update packet header information or provide metadata for the packet where the packet header information or metadata is used as search data for matching rules in memory 145.

Routed packet identification stage 131 examines incoming packets and determines whether they are to be L3 routed, or simply bridged. Memory 139 includes a routed packet identification information 140 that includes entries for qualifying packets as routable. According to one embodiment, a packet is qualified as routed on one or more of: the packet's destination MAC, the packet's ingress L2 interface, or the packet's VLAN. As an example, routed packet identification information 140 may include an entry that matches all incoming packets whose DMAC matches a MAC address of network device 100 (the "router MAC") such that packets with a destination MAC that matches the entry will be treated as a routed packet.

Routing lookup stage 132 uses memory 141 to perform a routing lookup to determine, for example, a next hop IP address, a next hop ID or other information related to the egress L3 interface for the packet. For unicast packets, the next hop ID determined at routing lookup stage 132 maps directly to an egress L3 interface. For multicast packets, the next hop ID may further map to a multicast group ID that maps to multiple egress L3 interfaces.

At clamping class code lookup stage 134, clamping class table 144 in memory 143 encodes MSS clamping class codes based on information related to egress L3 interfaces, such as next hop IDs. According to one embodiment, the clamping class code is a two-bit code, one bit for IPv4 MSS clamping and the other bit for IPv6 MSS clamping. The following are non-limiting examples of two-bit clamping class codes mapped to the types of clamping they represent: 00= IPv6 MSS clamping disabled, IPv4 MSS clamping disabled; 01 = IPv6 MSS clamping disabled, IPv4 MSS clamping enabled; 10 = IPv6 MSS clamping enabled, IPv4 MSS clamping disabled; 11 = IPv6 MSS clamping enabled, IPv4 MSS clamping enabled. The default behavior for a search miss can be configured to return a code of 00, such that L3 interfaces on which no MSS clamping is enabled can be omitted from clamping class table 144.

Thus, as discussed above, the search data for a packet may include the clamping class code associated with the packet to match, for example, an IPv4 or IPv6 MSS clamping rule. In another example embodiment, instead of marking packets with an MSS class code for use in clamping rule matching, clamping rules 146 can be matched directly on the next hop ID identified from routing table 142. In other words, the next hop identifier or other indicator of the egress L3 interface can be used as a qualifier for a rule. However, this approach requires more resources (e.g., TCAM resources) at the rules processing stage 136 compared to using short clamping class codes.

Some network devices implement L3 flooding to multicast a packet when the network device does not have a specific next-hop resolution for the packet prior to rule processing stage 136. In packet processors that support L3 flooding, the forwarding pipeline (e.g., forwarding pipeline 130) may assign the packet a multicast group ID that identifies a multicast group for L3 flooding. Clamping rules may be encoded with a multicast group qualifier representing a multicast group to which the rule applies, among other qualifiers (e.g., IP type, a routed traffic qualifier, a TCPControl qualifier). Thus, in some embodiments, clamping class table 144 may include multicast group IDs mapped to next hop IDs or other data for looking up multicast group IDs.

As discussed, if an MSS clamping rule is matched for a packet, packet processor 104 offloads the packet to CPU 112 or MSS clamping appliance 160 for MSS clamping. If no clamping rule is matched for a packet, packet forwarding continues for the packet without applying MSS clamping to the packet.

Next hop stage 138 uses memory 147 to perform next hop resolution according to a next hop table 148 (e.g., an address resolution protocol (ARP) table) to determine the media access control (MAC) address of the next hop or otherwise determine the next hop MAC address. Thus, ingress packet 150 can be transformed to produce an egress packet 152 with updated addresses for forwarding and a clamped MSS value.

Embodiments may leverage existing tables in commercially available packet processors to facilitate offloading for MSS clamping. For example, the MSS clamping class codes for unicast forwarded packets can be encoded in an existing table using bits not otherwise used by the forwarding logic of packet processor 104. In an even more particular example, otherwise unused bits in a next hop table can be used for the MSS clamping class code for a next hop identifier because these bits are not used by the logic of the processor 104 for forwarding. For example, if the destination field in a next hop table includes bits that are not used by packet processor 104 for forwarding unicast packets, these bits can be used to encode the MSS clamping class code such that the bits of this field that are returned from the next hop table for a next hop can indicate the MSS clamping class code for the packet. The next hop table can, however, be used in L3 flooding scenarios to assign multicast group IDs. As discussed above, clamping rules may be written for multicast group IDs. The above destination field is provided by way of example. Unused bits in other fields may also be used for encoding codes.

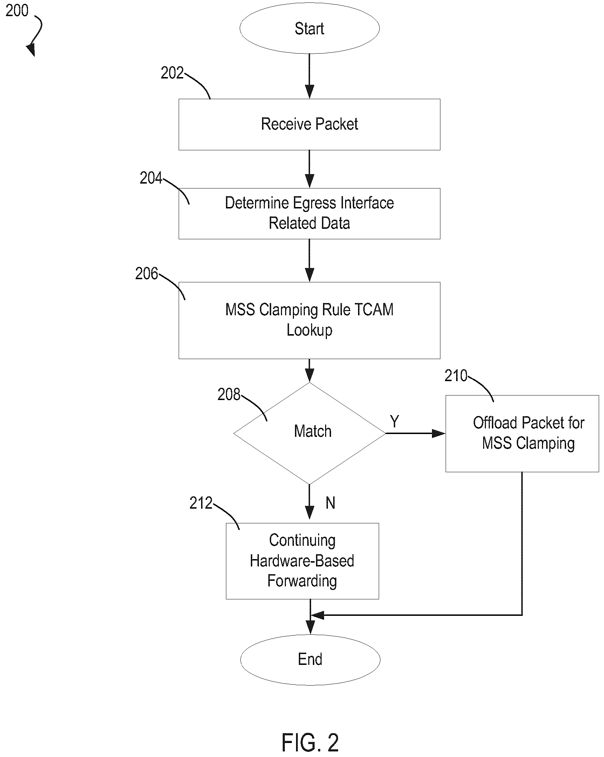

Referring to FIG. 2, a flowchart illustrating one embodiment of a method 200 for MSS clamping is illustrated. At step 202, a packet processor receives an ingress packet to be processed in accordance with the present disclosure. For example, packet processor 104 receives packet 150 from client 103 or server 105. At step 204, the packet processor determines egress L3 interface related data associated with the egress L3 interface determined for the packet, such as, but not limited to, a next hop identifier or other identifier of the egress L3 interface, a multicast group identifier, an MSS clamping class code associated with the egress L3 interface.

In one embodiment, packet processor 104 performs a routing lookup to determine, for example, the next hop node IP address and a next hop identifier. The determination of next hop IP address and next hop identifier may occur through one or more stages. According to one embodiment, packet processor 104 identifies (search, match) a clamping class code for the packet using the next hop identifier, where the clamping class code indicates whether IPv4 MSS clamping or IPv6 MSS clamping is enabled on the egress L3 interface corresponding to the next hop identifier. In another embodiment, packet processor 104 identifies a multicast group identifier associated with the next hop identifier.

At step 206, the packet processor identifies (search, match) an MSS clamping rule for the packet based on the egress L3 interface. In one embodiment, the packet processor applies search data for the packet against contents of TCAM to identify a matching MSS clamping rule, if any, from the TCAM. The search data includes egress L3 interface related data and, in some embodiments, additional data to identify an MSS clamping rule for the packet. In some embodiments, the search data includes at least one of a next hop identifier or other indicator of the egress L3 interface determined for the packet, an MSS clamping class code determined for the packet, or a multicast group identifier determined for the packet. The search data, in some embodiments, also includes one or more of the following: an indicator of whether a specific TCP flag (e.g., TCP SYN flag) is set, the IP version of the packet, an indicator of whether the patent is a routed packet, the MSS value set in the packet.

In some embodiments, an MSS clamping rule is encoded with an MSS value qualifier and the search data includes the MSS value set in the packet. The MSS value qualifier may comprise, for example, an MSS ceiling and, in some embodiments, a range of MSS values. Thus, identifying the MSS clamping rule for the packet can include matching on the MSS value, such as the MSS value set in the packet exceeding the MSS ceiling. For example, rule processing stage 136 may use range checkers or UDF resources to match the MSS value from the packet to an MSS clamping rule.

If a clamping rule is identified for the packet (step 208), the packet processor, at step 210, executes the action from the match MSS clamping rule to offload the packet to another processing unit (e.g., CPU 112, MSS clamping appliance 160) as specified by the rule to apply MSS clamping and drops the packet from the pipeline. If no MSS clamping rule is returned, the packet processor continues processing the packet to forward the packet without MSS clamping (step 212).

FIG. 2 is merely provided as an illustrative example. Embodiments may, for example, perform the steps in different orders, omit steps, repeat steps, or perform alternative steps.

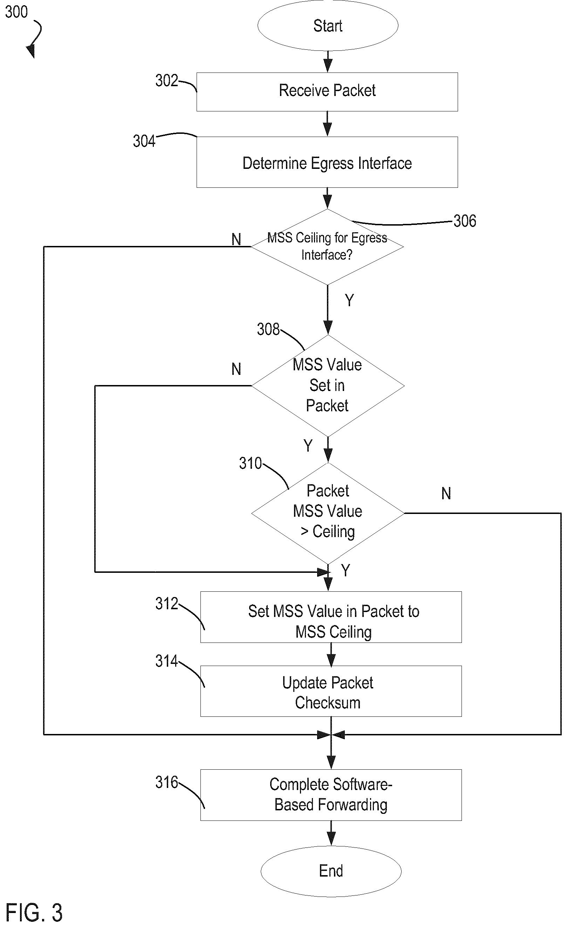

Referring to FIG. 3, a flowchart illustrating one embodiment of a method 300 for MSS clamping. The operations can apply to any suitable embodiment of the present disclosure. However, to illustrate the operations in the context of an illustrative embodiment, operations are illustrated with reference to the embodiment disclosed in FIG. 1.

At step 302, a processing unit (e.g., CPU 112, a processor of MSS clamping appliance 160) receives a packet offloaded for MSS clamping. At step 304, the processing unit determines the egress L3 interface for the packet. For example, the processing unit performs a routing lookup. At step 306, the processing unit determines if an MSS ceiling is set for the egress L3 interface. For example, MSS clamping component 126 performs a lookup of MSS clamping configuration 122. If an MSS ceiling is set for the egress L3 interface, MSS clamping component 126, at step 308, determines if an MSS value is set in the packet header. If an MSS value is set in the packet header, MSS clamping component 126, at step 310, determines if the MSS value set in the packet exceeds the MSS ceiling set for the egress L3 interface. If an MSS ceiling is set for the egress L3 interface and no MSS value is set in the packet or the MSS value set in the packet exceeds the MSS ceiling, MSS clamping component 126, at step 312, rewrites the packet header to include the MSS ceiling value as the MSS value in the packet header. MSS clamping component, at step 314, updates the packet checksum to account for the rewritten header.

In some embodiments, one or more of the operations of determining whether an MSS value is set in the packet header or whether the MSS value set in the packet exceeds the MSS ceiling set for the egress L3 interface may be implemented through the search to identify the MSS rule for the packet prior to the packet being offloaded to the CPU. In some embodiments, an operation implemented as part of the search to identify a matching MSS rule for a packet is not performed again by the CPU.

The processing unit, at step 316, continues processing to forward the packet. For example, CPU 112 completes software-based forwarding of the packet. In some embodiments, CPU 112 returns the packet, as MSS clamped, to the packet processor 104 for processing by one or more stages of pipeline 130, such as processing by next hop stage 138. CPU may return the packet to packet processor 104 via internal ethernet connection 118 or high-speed bus 116. As another example, MSS clamping appliance 160 returns the packet to network device 100.

If no MSS ceiling is set for the egress L3 interface determined for the packet or if the MSS value in the packet header does not exceed the MSS ceiling set for the egress L3 interface, the processing unit continues with software-based forwarding to forward the packet. The processing unit, at step 316, continues processing to forward the packet.

FIG. 3 is merely provided as an illustrative example. Embodiments may, for example, perform the steps in different orders, omit steps, repeat steps, or perform alternative steps.

In this disclosure, specific embodiments have been described with reference to the accompanying figures. In the above description, numerous details are set forth as examples. It will be understood by those skilled in the art, and having the benefit of this Detailed Description, that one or more embodiments described herein may be practiced without these specific details and that numerous variations or modifications may be possible without departing from the scope of the embodiments. Certain details known to those of ordinary skill in the art may be omitted to avoid obscuring the description.

In the above description of the figures, any component described with regard to a figure, in various embodiments, may be equivalent to one or more like-named components shown and/or described with regard to any other figure. For brevity, descriptions of these components may not be repeated with regard to each figure. Thus, each and every embodiment of the components of each figure is incorporated by reference and assumed to be optionally present within every other figure having one or more like-named components. Additionally, in accordance with various embodiments described herein, any description of the components of a figure is to be interpreted as an optional embodiment, which may be implemented in addition to, in conjunction with, or in place of the embodiments described with regard to a corresponding like-named component in any other figure.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

As used herein, the phrase operatively connected, or operative connection, means that there exists between elements/components/devices a direct or indirect connection that allows the elements to interact with one another in some way. For example, the phrase 'operatively connected' may refer to any direct (e.g., wired directly between two devices or components) or indirect (e.g., wired and/or wireless connections between any number of devices or components connecting the operatively connected devices) connection. Thus, any path through which information may travel may be considered an operative connection.

While embodiments described herein have been described with respect to a limited number of embodiments, those skilled in the art, having the benefit of this Detailed Description, will appreciate that other embodiments can be devised which do not depart from the scope of embodiments as disclosed herein. Accordingly, the scope of embodiments described herein should be limited only by the attached claims.

The disclosure in the application also includes the following numbered clauses:
1. A method in a packet processor, the method comprising:
   applying a search data for a transmission control protocol (TCP) handshake packet against contents of a first ternary content-addressable memory (TCAM) to identify a maximum segment size (MSS) clamping rule from the first TCAM, the search data comprising egress layer 3 (L3) interface related data determined for the TCP handshake packet and the MSS clamping rule having an MSS clamping rule qualifier that matches the egress L3 interface related data and including an action to offload the TCP handshake packet to a processing unit for MSS clamping; and
   based on the MSS clamping rule, offloading the TCP handshake packet to the processing unit to perform MSS clamping on the TCP handshake packet.
2. The method of Clause 1, wherein the processing unit is a central processing unit (CPU) of a network device.
3. The method of Clause 2, wherein offloading the TCP handshake packet to the processing unit to perform MSS clamping on the TCP handshake packet comprises sending the packet to the CPU over an internal Ethernet connection.
4. The method of Clause 1, wherein the egress L3 interface related data comprises an egress L3 interface identifier.
5. The method of Clause 1, wherein the egress L3 interface related data comprises an MSS clamping class code for an egress L3 interface.
6. The method of Clause 5, further comprising identifying the MSS clamping class code for the TCP handshake packet from a second TCAM, wherein the clamping class code indicates one or more versions of Internet protocol for which MSS clamping is enabled for the egress L3 interface.
7. The method of Clause 6, identifying the MSS clamping class code for the TCP handshake packet from the second TCAM comprises applying a next hop identifier for the TCP handshake packet against contents of the second TCAM.
8. The method of Clause 1, wherein the egress L3 interface related data comprises a multicast group identifier.
9. The method of Clause 8, further comprising identifying the multicast group identifier for the TCP handshake packet from a second TCAM using a next hop identifier for the TCP handshake packet.
10. The method of Clause 1, wherein the first TCAM comprises one or more of an Internet protocol version 4 (IPv4) MSS clamping rule, an Internet protocol version 6 (IPv6) MSS clamping rule, or a multicast clamping rule.
11. A method comprising:
   in a packet processor application specific integrated circuit (ASIC) of a network device:
      applying a search data for a transmission control protocol (TCP) handshake packet against contents of a first memory to identify a maximum segment size (MSS) clamping rule from the first memory, the search data comprising egress layer 3 (L3) interface related data determined for the TCP handshake packet and the MSS clamping rule having an MSS clamping rule qualifier that matches the egress L3 interface related data and including an action to offload the TCP handshake packet to a processing unit; and
      based on the MSS clamping rule, offloading the TCP handshake packet to a central processing unit of the network device to perform MSS clamping on the TCP handshake packet; and
   executing software by the central processing unit of the network device to rewrite a packet header of the TCP handshake packet to set an MSS value in the TCP handshake packet to an MSS ceiling configured for an egress L3 interface.
12. The method of Clause 11, wherein the egress L3 interface related data comprises an egress L3 interface identifier.
13. The method of Clause 11, wherein the egress L3 interface related data comprises an MSS clamping class code for the egress L3 interface.
14. The method of Clause 13, further comprising identifying the MSS clamping class code for the TCP handshake packet from a second memory, wherein the clamping class code indicates one or more versions of Internet protocol for which MSS clamping is enabled for the egress L3 interface.
15. The method of Clause 14, identifying the MSS clamping class code for the TCP handshake packet from the second memory comprises applying a next hop identifier for the TCP handshake packet against contents of the second memory.
16. The method of Clause 11, wherein the egress L3 interface related data comprises a multicast group identifier.
17. The method of Clause 16, further comprising identifying the multicast group identifier for the TCP handshake packet from a second memory using a next hop identifier for the TCP handshake packet.
18. The method Clause 11, wherein the first memory comprises one or more of an Internet protocol version 4 (IPv4) MSS clamping rule, an Internet protocol version 6 (IPv6) MSS clamping rule, or a multicast clamping rule.
19. A network device comprising:
   a plurality of network interfaces;
   a central processing unit;
   a memory coupled to the central processing unit, the memory storing software code executable by the central processing unit to perform MSS clamping; and
   a packet processor coupled to the plurality of network interfaces and the central processing unit, the packet processor comprising:
      a first memory comprising a maximum segment size (MSS) clamping rule, the MSS clamping rule having an MSS clamping rule qualifier for matching the MSS clamping rule and including an action to cause packet offload to the central processing unit for MSS clamping; and
      logic configured to apply search data for a transmission control protocol (TCP) handshake packet to the first memory to identify the MSS clamping rule and offload the TCP handshake packet to the central processing unit to perform MSS clamping on the TCP handshake packet, the search data comprising egress layer 3 (L3) interface related data for the TCP handshake packet.
20. The network device of Clause 19, wherein the egress L3 interface related data comprises at least one of the following: a next hop identifier, an MSS clamping class code indicating one or more protocols for which MSS clamping is enabled, or multicast group identifier.

## Claims

1. A method in a packet processor, the method comprising:
applying a search data for a transmission control protocol, TCP, handshake packet against contents of a first ternary content-addressable memory, TCAM, to identify a maximum segment size, MSS, clamping rule from the first TCAM, the search data comprising egress layer 3, L3, interface related data determined for the TCP handshake packet and the MSS clamping rule having an MSS clamping rule qualifier that matches the egress L3 interface related data and including an action to offload the TCP handshake packet to a processing unit for MSS clamping; and
based on the MSS clamping rule, offloading the TCP handshake packet to the processing unit to perform MSS clamping on the TCP handshake packet.

2. The method of Claim 1, wherein the processing unit is a central processing unit, CPU, of a network device.

3. The method of Claim 2, wherein offloading the TCP handshake packet to the processing unit to perform MSS clamping on the TCP handshake packet comprises sending the packet to the CPU over an internal Ethernet connection.

4. The method of any preceding claim, wherein the egress L3 interface related data comprises an egress L3 interface identifier.

5. The method of any preceding claim, wherein the egress L3 interface related data comprises an MSS clamping class code for an egress L3 interface.

6. The method of Claim 5, further comprising identifying the MSS clamping class code for the TCP handshake packet from a second TCAM, wherein the clamping class code indicates one or more versions of Internet protocol for which MSS clamping is enabled for the egress L3 interface.

7. The method of Claim 6, wherein identifying the MSS clamping class code for the TCP handshake packet from the second TCAM comprises applying a next hop identifier for the TCP handshake packet against contents of the second TCAM.

8. The method of any preceding claim, wherein the egress L3 interface related data comprises a multicast group identifier.

9. The method of Claim 8, further comprising identifying the multicast group identifier for the TCP handshake packet from a second TCAM using a next hop identifier for the TCP handshake packet.

10. The method of any preceding claim, wherein the first TCAM comprises one or more of an Internet protocol version 4, IPv4, MSS clamping rule, an Internet protocol version 6, IPv6, MSS clamping rule, or a multicast clamping rule.

11. The method of any preceding claim, wherein:
the packet processor is an application specific integrated circuit, ASIC, of a network device; and
based on the MSS clamping rule, the TCP handshake packet is offloaded to a central processing unit of the network device to perform MSS clamping on the TCP handshake packet.

12. The method of claim 11, further comprising executing software by the central processing unit of the network device to rewrite a packet header of the TCP handshake packet to set an MSS value in the TCP handshake packet to an MSS ceiling configured for an egress L3 interface.

13. A packet processor configured to perform a method as set out in at least one or claims 1 to 11.

14. A packet processor according to claim 13, wherein:
the packet processor is an application specific integrated circuit, ASIC, of a network device;
the packet processor is configured to perform the method of claim 11; and
the network device comprises software executable by the central processing unit of the network device to rewrite a packet header of the TCP handshake packet to set an MSS value in the TCP handshake packet to an MSS ceiling configured for an egress L3 interface.
